## Europäisches Patentamt

(19) **European Patent Office**

**Office européen des brevets**

(11) Publication number: **0 154 466**

**A1**

# (12) EUROPEAN PATENT APPLICATION

(21) Application number: **85301207.8**

(22) Date of filing: **22.02.85**

(51) Int. Cl.⁴: **F 16 B 13/06**

(30) Priority: **24.02.84 GB 8404948**

(43) Date of publication of application:
**11.09.85 Bulletin 85/37**

(84) Designated Contracting States:
**AT BE CH DE FR GB IT LI LU NL SE**

(71) Applicant: **The Rawlplug Company Limited**
**Rawlplug House London Road**
**Kingston-upon-Thames, Surrey KT2 6NR United**
**Kingdom(GB)**

(72) Inventor: **Lafferty, Hugh c/o The Rawlplug Company**
**Limited**
**Skibo Drive Thornliebank Industrial Estate**
**Glasgow Scotland(GB)**

(74) Representative: **Purvis, William Michael Cameron et al,**
**D. Young & Co. 10 Staple Inn**
**London WC1V 7RD(GB)**

(54) **Bolt anchor.**

(57) A bolt anchor for anchoring a bolt in concrete comprises a one piece sleeve member (1) having an end ring (2), a body portion (3), a further end ring (4) including weak portions (4a) aligned with slots (10) in the body portion (3) and a tapered nut (5) with longitudinal ridges (12a) thereon, the nut (5) being joined to the ring (4) by webs (12).

When a bolt is inserted through the sleeve member (1) into the nut (5) and tightened the webs (12) fracture and the weak portions (4a) fracture allowing the nut (5) to be pulled into the body portion (3) to expand it.

FIG.1.

# BOLT ANCHOR

The invention relates to a bolt anchor.

Bolt anchors are well known and, as described for example in British Patent 444.623. to John Joseph Rawlings, comprise a split or segmental metal tube or sleeve and a member movable longitudinally therein, one or both of these parts having a surface which is oblique to the axis of the tube or sleeve so that when the member is moved in one direction the tube or sleeve is expanded by spreading the segmental part thereof apart, whereby the tube or sleeve becomes wedged or clamped in a hole into which it has been inserted in brickwork, masonry, concrete or the like.

Known bolt anchors may comprise two, three, four or more segments, a ferrule or cap which surrounds the segments at one end and is crimped or spun into a groove in the segments and a nut or bolt head which is of tapering form and is engaged in the segments at the other end. Usually a spring ring or like means is provided around the anchor to retain the components in their assembled condition until they are used.

Many millions of such anchors have been manufactured and generally have performed satisfactorily.

The manufacture of such anchors is however relatively expensive, particularly the operations of assembling the segments, ferrule or cap, bolt or nut and spring ring.

According to the invention there is provided a bolt anchor characterised in that it is formed by casting as a single component and comprises a tubular body portion having a ring at one end with a profiled circumference and longitudinally extending slots in the wall of the tubular body portion, the longitudinally extending slots extending to or adjacent to the other end of the tubular body portion such that a nut or bolt head can readily be drawn into said other end of the tubular body portion to expand it.

The nut, which is preferably tapered, may be incorporated in the anchor integral with the body portion as a nut portion provided at said other end of the body portion and coupled to said further ring by a portion or portions of relatively small cross-sectional area such that a force applied to the nut to draw it into the sleeve will fracture said portion or portions of relatively small cross sectional area.

Advantageously the tapered nut has longitudinally extending ribs thereon, which ribs engage in the longitudinally extending slots in the body member to prevent rotation of the nut.

Preferably the portion or portions of relatively small cross sectional area are of greater cross sectional area when the nut is cast but a machine operation subsequently effected on the nut reduces the section of said portion or portions.

Alternatively the nut or bolt, preferably tapered, can be a separate member used in conjunction with the body portion.

Thus it will be seen that a single casting operation followed by a screw threading operation can form a one piece anchor comprising two, three, four or more segments possibly mounting a tapered nut, which single cast article can be inserted into a hole in brickwork, masonry, concrete or the like and can fracture upon torque being applied to a bolt engaged therein, thereby to form a bolt anchor with a conventional securing action. Such a bolt anchor can be manufactured considerably more cheaply than bolt anchors of previously known kind particularly since manual assembly operations to assembly a plurality of components are no longer required.

Preferably the ring with a profiled circumference at said one end of the body portion includes a plurality of projecting fins, preferably at least one pair of diametrically oppositely projecting fins, which can engage wall portions of a hole in which the anchor is inserted.

If desired the end ring at said one end can include axially projecting portions which would upon initial fixing project proud of a surface into a hole in which the anchor was inserted but which, upon force being applied to the axially projecting portions, would collapse so as to bring the item being secured by the anchor down to the surface level of said surface.

The invention is diagrammatically illustrated by way of example in the accompanying drawing in which:-

Figure 1 is an elevation of one embodiment of an anchor according to the invention;

Figure 2 is an elevation corresponding to Figure 1 but with the anchor rotated through $90^{\circ}$ about a longitudinally extending axis;

0154466

Figure 3 is an end view corresponding to Figure 1;

Figure 4 is a sectional view taken on line IV-IV of Figure 1;

Figure 5 is an elevation of a second embodiment of an anchor according to the invention;

Figure 6 is an elevation corresponding to Figure 5 but with the anchor rotated through 90° about a longitudinally extending axis;

Figures 7 and 8 are sectional views taken on lines VII-VII and VIII-VIII respectively of Figure 5; and

Figure 9 is a view taken in the direction of arrow IX of Figure 5.

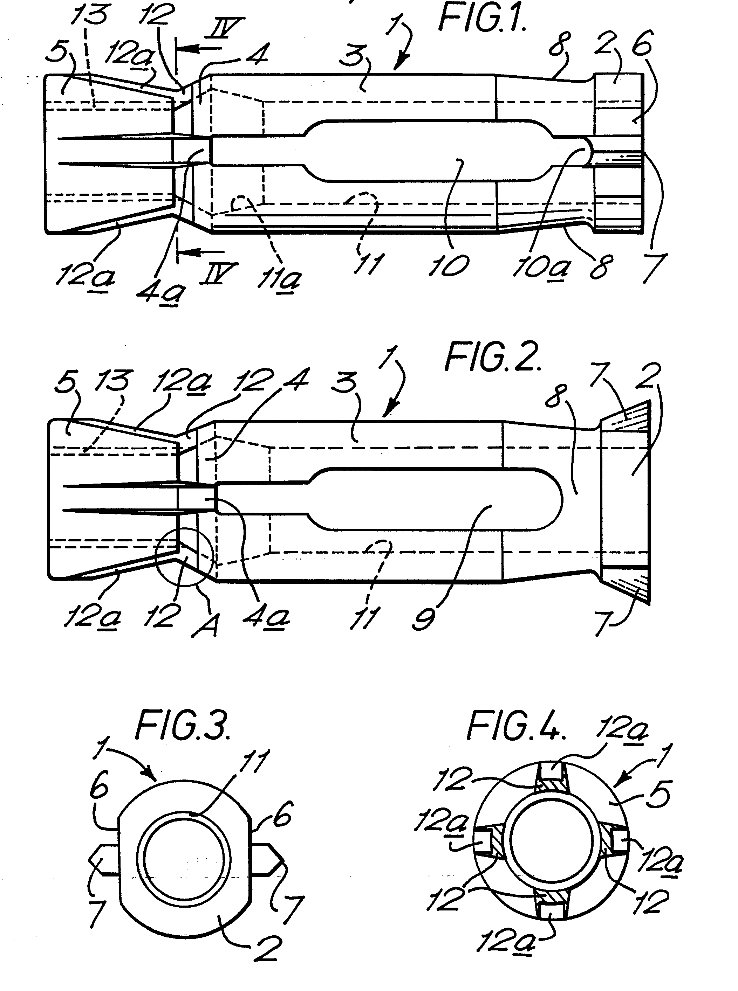

Referring to the drawings and firstly to Figures 1 to 4, an anchor comprises an integral tubular sleeve member 1 formed by sand or investment casting or any other process which utilizes sacrificial or expanding cores and comprising an end ring 2, an intermediate body portion 3, a further end ring 4 and a tapered nut 5.

The first end ring 2 is of substantial construction and is intended to retain its ring form in use. It incorporates a number of oppositely disposed flats 6 from each of which a respective fin 7 projects, the fins 7 being designed to engage wall portions of a hole in concrete or the like in which hole the anchor 1 is engaged. The fins 7 prevent the anchor from rotating in the hole. Adjacent the end ring 2 the body portion 3 has flats 8 at diametrically opposite positions. Each of the flats 8 is in axial alignment with a respective one of two slots 9 which extend through the wall of the body portion 3. Offset by 90° from the slots 9 are further slots 10 each of which extends, as can be seen in Figure 1, almost to the ring 2. The slots 10 are similar to the slots 9 but include an additional portion indicated at 10a compared with the slots 9.

The bore 11 of the end ring 2 and the body portion 3 is indicated by dotted lines in Figure 1. Adjacent the further end ring 4 the bore 11 opens out as indicated by a portion 11a and from the further end ring 4 extend webs 12 which bridge from the further end ring 4 to the nut 5 and form longitudinally extending ribs 12a on the frusto conical outer surface of the nut 5. Figure 2 shows in the part circled at A that the webs 12 are, at their junction with the nut 5, initially of quite considerable section but that they can be reduced by an operation of cutting a screw thread indicated at 13 into the bore of the nut 5 such that they are reduced to a size which can readily be fractured. The anchors 1 are preferably cast of material suitable for production by sand or investment casting or any process which utilizes a sacrificial or expanding core, malleable iron is particularly suitable.

Upon insertion of the anchor 1 into a hole drilled in for example concrete, the anchor will initially lie within the bore and only the fins 7 of the end ring 2 will engage the concrete. However, after insertion of a bolt into the anchor 1 through the end ring 2 and the bore 11 of the intermediate portion 3 so that it engages the thread 13 of the nut 5, tightening of the bolt will pull the nut 5 towards the end ring 2 and will fracture the weakened webs 12 to enable the nut 5 to be pulled into the end ring 4 so that the frusto conical form of the nut 5 expands the further end ring 4 and causes it to fracture at portions 4a of the further end ring 4 which are aligned with the slots 9 and 10. Immediately subsequent to fracturing of the webs 12 the nut 5 may rotate slightly with respect to the sleeve but the ribs 12a remaining on the nut will locate in the inner end portions of the slots 9 and 10 to prevent further rotation and as the bolt is further tightened the portions of the further end ring 4 and the body portion 3 between the slots 9 and 10 will expand outwardly to grip the inner wall of the hole in the concrete and will deform to suit the profile of the hole in known manner.

If desired the nut 5 and webs 12 can be omitted and a bolt used with a head of similar form to the nut 5, the bolt being inserted into the sleeve through the further end ring 4 so that its head projects from the further end ring 4. The end of the bolt projecting from the end ring 2 receives a nut which when tightened will pull the head of the bolt towards the end ring 2 in the same manner as that in which the nut 5 was pulled towards the end ring 2 as described above.

It may be found desirable to cast the nut 5 in solid form and to effect a drilling operation thereon prior to the screw threading operation.

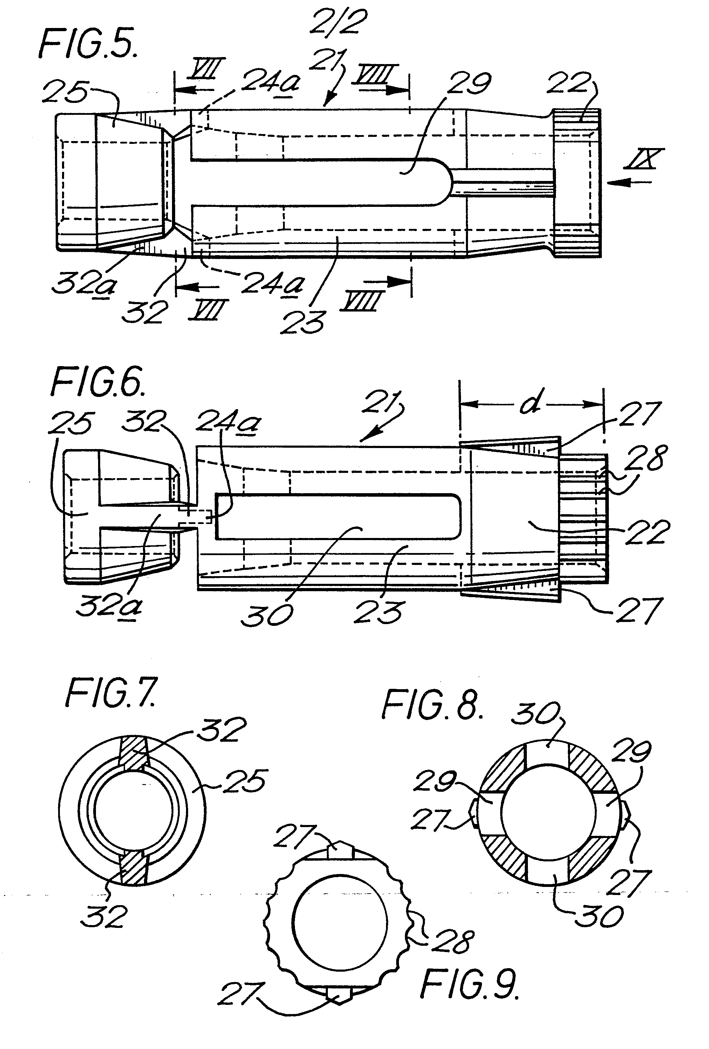

Referring to Figures 5 to 9, the anchor shown therein comprises a cast integral tubular sleeve member 21 having an end ring 22, an intermediate body portion 23 and a tapered nut 25. As in the previous embodiment the end ring 22 is of substantial construction and indeed in this embodiment extends a substantial distance 'd' from the outer end of the sleeve member 21. Projecting fins 27 to lock the sleeve member 21 against rotation are set back a short distance from the outer end and the outer circumference at the outer end has longitudinally extending grooves 28 therein to give a scalloped appearance.

Longitudinally extend slots 29 and 30 are provided in the side wall of the body portion 23 and the slots 29 extend fully to the inner end of the body portion 23 so that at the inner end only two webs 32 are provided connecting the nut 25 to the tubular sleeve 23. Ribs 32a on the nut 25 are drawn into the slots 30 upon fracturing of portions 24a of the body portion 23 provided at the ends of the slots 30.

If desired the nut could be attached to the body portion by a web of very thin cross section which extended completely around the periphery of the nut, which web would shear when a pulling force was applied to the nut.

6                              **0154466**

## CLAIMS

1.     A bolt anchor characterised in that it is formed by casting as a single component and comprises a tubular body portion (3, 23) having a ring (2, 22) at one end with a profiled circumference and longitudinally extending slots (9, 10, 29, 30) in the wall of the tubular body portion (3, 23), the longitudinally extending slots extending to or adjacent to the other end of the tubular body portion (3, 23) such that a nut (5, 25) or bolt head can readily be drawn into said other end of the tubular body portion (3, 23) to expand it.

2.     A bolt anchor according to claim 1, in which the nut is a tapered nut (5, 25) incorporated in the anchor integral with the body portion (3, 23) as a nut portion provided at said other end of the body portion (3, 23) and coupled to the body portion (3, 23) by a portion or portions (12, 32) of relatively small cross sectional area such that a force applied to the nut (5, 25) to draw it into the body portion (3, 23) will fracture said portion or portions (12, 32) of relatively small cross sectional area.

3.     A bolt anchor according to claim 2, in which the tapered nut (5, 25) has longitudinally extending ribs (12a, 32a) thereon, which ribs (12a, 32a) engage in the longitudinally·extending slots in the body member (3, 23) to prevent rotation of the nut (5, 25).

4.     A bolt anchor according to claim 3, in which the portion or portions (12, 32) of relatively small cross sectional area are of greater cross sectional area when the nut (5, 25) is cast but a screw tapping operation subsequently effected on the nut (5, 25) reduces the section of said portion or portions (12, 32).

5.     A bolt anchor according to claim 1, in which the nut or bolt head is a separate member used in conjunction with the body portion (3, 23).

6.  A bolt anchor according to any one of claims 1 to 5, in which the ring (2, 22) with a profiled circumference at said one end of the body portion (3, 23) includes a plurality of projecting fins (7, 27) which can engage wall portions of a hole in which the anchor is inserted.

7.  A bolt anchor according to claim 6, in which the plurality of projecting fins (7, 27) comprises a pair of diametrically oppositely projecting fins.

8.  A bolt anchor according to any one of claims 1 to 7, in which the end ring at said one end of the body portion (3, 23) includes axially projecting portions which upon initial fixing project proud of a surface into a hole in which the anchor is inserted but, upon force being applied to the axially projecting portions, collapse so as to bring the item being secured by the anchor down to the surface level of said surface.

0154466

FIG.1.

FIG.2.

FIG.3.

FIG.4.

**FIG.5.**

25  VII  24a  21  VIII  29  22  IX

32a  32  VII  24a  23  VIII

**FIG.6.**

25  32  24a  21  d  27  28  22

32a  30  23  27

**FIG.7.**

32  25  32

**FIG.8.**  30  29

29  29

27  27

30

27  28

**FIG.9.**

**0154466**

**European Patent Office**

# EUROPEAN SEARCH REPORT

Application number

| DOCUMENTS CONSIDERED TO BE RELEVANT | | | EP 85301207.8 |
|---|---|---|---|
| **Category** | **Citation of document with indication, where appropriate, of relevant passages** | **Relevant to claim** | **CLASSIFICATION OF THE APPLICATION (Int. Cl 4)** |
| D,A | GB - A - 444 623 (JOHN JOSEPH RAW-LINGS) <br> * Claims; fig. 1-8 * <br> -- | 1 | F 16 B 13/06 |
| A | DE - A1 - 3 111 361 (DRILLCO DEVICES) <br> * Abstract; fig. 1,2 * <br> -- | 1 | |
| A | DE - B2 - 2 458 317 (LIEBIG, HEIN-RICH) <br> * Claim 1; fig. 1,2 * <br> -- | 1 | |
| P,A | GB - A - 2 139 726 (TUCKER FASTE-NERS) <br> * Abstract; fig. 3 * <br> -- | 1 | **TECHNICAL FIELDS SEARCHED (Int Cl 4)** |
| A | GB - A - 2 033 039 (VINCENTE SAN-CHEZ VELASCO) <br> * Abstract; fig. 5,7 * <br> -- | 1 | F 16 B |
| A | GB - A - 2 109 886 (HILTI AG) <br> * Abstract; fig. 2 * <br> ---- | 1 | |

The present search report has been drawn up for all claims

| Place of search | Date of completion of the search | Examiner |
|---|---|---|
| VIENNA | 14-05-1985 | REIF |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82